# EUROPEAN PATENT APPLICATION

(11) **EP 4 333 420 A1**
(43) Date of publication of application: **06.03.2024**
(21) Application number: 22795631.5
(22) Date of filing: 19.04.2022
(51) Int. Cl.: H04N 5/232, G06T 19/00, H04N 7/18

(54) **INFORMATION PROCESSING DEVICE, INFORMATION PROCESSING METHOD, AND PROGRAM**

(30) Priority: 27.04.2021 JP 2021075040
(71) Applicant: CANON KABUSHIKI KAISHA, Tokyo 146-8501 (JP)
(72) Inventor: FUJITA, Shu, Tokyo 146-8501 (JP)
(74) Representative: Canon Europe Limited
(86) International application number: PCT/JP2022/018133
(87) International publication number: WO 2022/230718

(57) **Abstract**

A virtual camera path data processing apparatus 1 includes a virtual camera information acquisition unit 101 configured to acquire a parameter that represents a position of a virtual viewpoint and a line-of-sight direction from the virtual viewpoint, the parameter corresponding to a frame included in virtual viewpoint video generated based on a plurality of captured images of a subject, the plurality of captured images being obtained by a plurality of image capturing devices; a coordinate system adjustment information acquisition unit 102 configured to specify a position and an orientation of the subject in the virtual viewpoint video; and a virtual camera path data output unit configured to output virtual viewpoint data in which the acquired parameter is associated with information based on the specified position and orientation of the subject.

## Description

### Technical Field

The present disclosure relates to a technique for generating virtual viewpoint video.

### Background Art

Recently, attention has been given to a technique for capturing images of an object with a plurality of image capturing devices arranged around an image-capturing area and generating video (virtual viewpoint video) viewed from a designated viewpoint (virtual viewpoint) by using a plurality of captured images acquired from the image capturing devices. The technique for generating virtual viewpoint video allows a video creator to create powerful content from a viewpoint by using, for example, captured video of a soccer game or a basketball game. Such virtual viewpoint video allows a user who is viewing the content to watch the game while moving the viewpoint as desired, and can make the user feel as if they are more actually experiencing what is going on in the game than existing captured images. PTL 1 discloses a technique for determining a virtual viewpoint through the operation of a device or a UI screen.

### Citation List

### Patent Literature

PTL 1: Japanese Patent Laid-Open No. 2017-212592

### Summary of Invention

### Technical Problem

The generation of virtual viewpoint video may involve generating virtual viewpoint video such that a subject whose images are to be captured with a plurality of image capturing devices is arranged at any position in the virtual viewpoint video. However, the arrangement of the subject at any position in virtual viewpoint video may has a problem in that appropriate virtual viewpoint video is difficult to generate simply by determining a virtual viewpoint. This problem is not taken into account in data of a virtual viewpoint generated by a method described in PTL 1.

The present disclosure has been made in view of the problem described above, and an object thereof is to enable output of information for enabling generation of virtual viewpoint video such that a subject is arranged at a desired position in the virtual viewpoint video.

### Solution to Problem

An information processing apparatus according to the present disclosure includes acquisition means for acquiring a parameter that represents a position of a virtual viewpoint and a line-of-sight direction from the virtual viewpoint, the parameter corresponding to a frame included in virtual viewpoint video generated based on a plurality of captured images of a subject, the plurality of captured images being obtained by a plurality of image capturing devices; specifying means for specifying a position and an orientation of the subject in the virtual viewpoint video; and output means for outputting virtual viewpoint data in which the acquired parameter is associated with information based on the specified position and orientation of the subject.

### Advantageous Effects of Invention

According to the present disclosure, it is possible to output information for enabling generation of virtual viewpoint video such that a subject is arranged at a desired position in the virtual viewpoint video.

### Brief Description of Drawings

[Fig. 1] Fig. 1 is a diagram for describing the configuration of an information processing system.
[Fig. 2A] Fig. 2A is an illustration for describing coordinate system adjustment information.
[Fig. 2B] Fig. 2B is an illustration for describing coordinate system adjustment information.
[Fig. 2C] Fig. 2C is an illustration for describing coordinate system adjustment information.
[Fig. 2D] Fig. 2D is an illustration for describing coordinate system adjustment information.
[Fig. 2E] Fig. 2E is an illustration for describing coordinate system adjustment information.
[Fig. 2F] Fig. 2F is an illustration for describing coordinate system adjustment information.
[Fig. 3] Fig. 3 is a diagram illustrating an example format of sequence data.
[Fig. 4] Fig. 4 is a diagram illustrating an example format of virtual camera path data.
[Fig. 5] Fig. 5 is a diagram illustrating an example format of virtual camera path data.
[Fig. 6] Fig. 6 is a diagram illustrating an example format of virtual camera path data.
[Fig. 7] Fig. 7 is a flowchart for describing the operation of a virtual camera path data generation processing apparatus.
[Fig. 8] Fig. 8 is a diagram for describing the configuration of a virtual viewpoint video generation apparatus.
[Fig. 9] Fig. 9 is a flowchart for describing the operation of the virtual viewpoint video generation apparatus.
[Fig. 10] Fig. 10 is a diagram for describing an example of the state of communication between devices.
[Fig. 11] Fig. 11 is a diagram illustrating an example of virtual camera path data.
[Fig. 12] Fig. 12 is a diagram for describing the hardware configuration of a virtual camera path data processing apparatus.

### Description of Embodiments

Embodiments of the present disclosure will be described hereinafter with reference to the drawings. The elements described in the following embodiments are merely examples of the embodiments, and the present disclosure is not limited thereto.

### (Embodiment 1)

The present embodiment describes an example of performing a process for generating virtual camera path data for generating virtual viewpoint video based on captured image data acquired with a plurality of image capturing devices from different directions. In the present embodiment, a virtual viewpoint used to generate virtual viewpoint video is referred to as a virtual camera. In other words, a virtual camera is a camera that is virtually arranged at the position of a virtual viewpoint, and the position of the virtual viewpoint and the line-of-sight direction from the virtual viewpoint correspond to the position of the virtual camera and the attitude of the virtual camera, respectively.

In the present embodiment, furthermore, information representing a change in the movement path and attitude of a virtual camera to generate virtual viewpoint video is referred to as virtual camera path data. That is, the virtual camera path data can be referred to as virtual viewpoint data including parameters of the position of the virtual viewpoint and the line-of-sight direction from the virtual viewpoint. The virtual camera path data according to the present embodiment includes a parameter representing the three-dimensional position of the virtual camera and parameters representing the attitudes of the virtual camera in the pan, tilt, and roll directions. The content of the virtual camera path data is not limited to that described above. For example, the virtual camera path data may include a parameter corresponding to the size of the field of view (angle of view) of the virtual viewpoint.

The virtual camera path data according to the present embodiment further includes parameters for a plurality of moving image frames included in the virtual viewpoint video. That is, the virtual camera path data has a configuration in which each of a plurality of frames included in a moving image of the virtual viewpoint video is associated with virtual camera parameters. With this configuration, the virtual camera path data represents a change in the movement path and attitude of the virtual camera in the virtual viewpoint video.

The virtual viewpoint video according to the present embodiment is also referred to as a free-viewpoint image. However, the virtual viewpoint video is not limited to an image corresponding to a viewpoint that the user designates freely (as desired), and includes, for example, an image corresponding to a viewpoint selected by the user from a plurality of candidates. The virtual viewpoint may be designated by the user's operation or designated automatically in accordance with an image analysis result or the like. In the present embodiment, the virtual viewpoint video will be described in the context of a moving image. In the present embodiment, a moving image includes a plurality of images (frames).

Accordingly, video in which virtual camera parameters change on a frame-by-frame basis when a subject appearing in virtual viewpoint video is stationary can also be referred to as a moving image. Further, video in which virtual camera parameters do not change on a frame-by-frame basis when a subject appearing in virtual viewpoint video is stationary appears to be stationary, but can be handled as a moving image having a plurality of frames. The present embodiment can also be applied to virtual viewpoint video including one frame, that is, a still image.

### <Hardware Configuration>

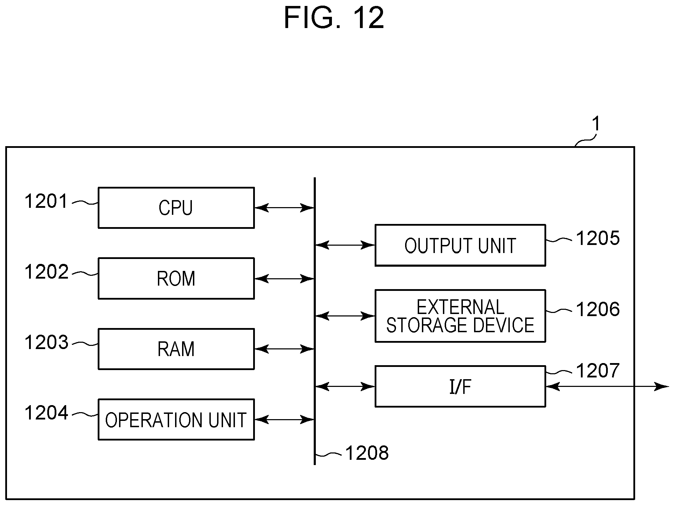

Fig. 12 is a block diagram illustrating an example hardware configuration of a computer applicable to a virtual camera path data processing apparatus described below. A camera path data processing apparatus 1 includes a CPU 1201, a ROM 1202, a RAM 1203, an operation unit 1204, an output unit 1205, an external storage device 1206, an I/F 1207, and a bus 1208. The hardware configuration described below is also applicable to other apparatuses in an information processing system described below.

The CPU 1201 performs overall control of the computer by using a computer program and data stored in the RAM 1202 or the ROM 1203, and also executes processes as processes to be executed by apparatuses described below. That is, the CPU 1201 functions as processing units in the virtual camera path data processing apparatus described below.

The RAM 1202 has an area for temporarily storing a computer program and data loaded from the external storage device 1206, data acquired from the outside via the I/F (interface) 1207, and the like. The RAM 1202 further has a work area to be used when the CPU 1201 executes various kinds of processing. That is, for example, the RAM 1202 can be allocated as a frame memory or can appropriately provide other various areas.

The ROM 1203 stores setting data, a boot program, and the like of the computer. The operation unit 1204 includes a keyboard, a mouse, and the like, and can input various instructions to the CPU 1201 upon being operated by a user of the computer. The output unit 1205 displays a processing result obtained by the CPU 1201. The output unit 1205 includes, for example, a liquid crystal display.

The external storage device 1206 is a large-capacity information storage device typified by as a hard disk drive device. The external storage device 1206 stores an operating system (OS) and a computer program for causing the CPU 1201 to implement the functions of the units of the virtual camera path data processing apparatus. The external storage device 1206 may also store pieces of image data to be processed.

The computer program and data stored in the external storage device 1206 are loaded into the RAM 1202 as appropriate under the control of the CPU 1201, and is to be processed by the CPU 1201. The I/F 1207 can be connected to a network such as a LAN or the Internet and other devices such as a projection device and a display device. The computer can acquire and transmit various kinds of information via the I/F 1207. Reference numeral 1208 denotes a bus that connects the units described above.

The hardware configuration is not limited to this. For example, at least one of the operation unit 1204, the output unit 1205, and the external storage device 1206 may be externally connected as a device different from the virtual camera path data processing apparatus 1. In this case, the CPU 1201 functions as a reception control unit that receives inputs from an operation device and an external storage device, and an output control unit that outputs data to an output device such as a table device and the external storage device.

The hardware configuration may also be implemented in the following form. A computer program code read from a storage medium is written in a memory included in a function expansion card inserted in the computer or a function expansion unit connected to the computer. Then, a CPU or the like included in the function expansion card or the function expansion unit performs part or all of the actual processing in accordance with instructions of the computer program code to implement the functions described above.

The code stored in the storage medium is a computer program code corresponding to the at least part of the processing described above or similar processing.

### <System Configuration>

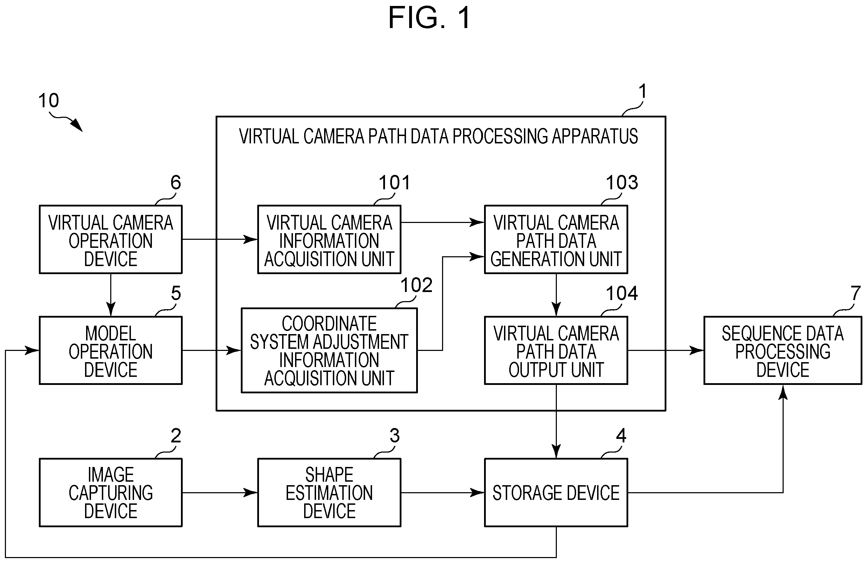

Fig. 1 is a diagram illustrating an example configuration of an information processing system including a virtual camera path data processing apparatus according to the present embodiment. An information processing system 10 includes the virtual camera path data processing apparatus 1, an image capturing device 2, a shape estimation device 3, a storage device 4, a model operation device 5, a virtual camera operation device 6, and a sequence data processing device 7.

The virtual camera path data processing apparatus 1 receives an input for determining parameters of the position and attitude of a virtual camera from the virtual camera operation device 6 described below, and generates virtual camera path data. The virtual camera path data processing apparatus 1 will be described in detail below.

The image capturing device 2 is an image capturing device that acquires a captured image to be used to generate virtual viewpoint video. In the present embodiment, virtual viewpoint video is generated based on a plurality of captured images obtained by using a plurality of image capturing devices. While only the image capturing device 2 is illustrated in Fig. 1, the information processing system 10 includes a plurality of image capturing devices. In the following description, the plurality of image capturing devices will be referred to as the image capturing device 2 unless otherwise distinguished. The plurality of image capturing devices capture images of an image-capturing area from a plurality of different directions. Examples of the image-capturing area include a stadium where a rugby game, a soccer game, or the like is played, a hall or a stage where a concert or the like takes place, and an imaging studio.

The plurality of image capturing devices are installed at different positions and in different directions so as to surround such an image-capturing area, and synchronously capture images. The plurality of image capturing devices need not be installed along the entire periphery of the image-capturing area, and may be installed only in a portion of the image-capturing area due to limited space for installation or the like. In addition, the number of image capturing devices is not limited. For example, when the image-capturing area is a rugby stadium, about several tens to several hundreds of image capturing devices may be installed around the stadium.

Further, a plurality of image capturing devices having different angles of view, such as a telephoto camera and a wide-angle camera, may be installed. For example, a telephoto camera can capture an image of an object at high resolution. Thus, the resolution of virtual viewpoint video to be generated is also improved. For example, a wide-angle camera can, by itself, capture a wide range. Thus, fewer cameras can be used. The plurality of image capturing devices are synchronized with each other by using one piece of time information in the real world, and time information representing an image capturing time is attached to an image of each frame of captured video.

The image capturing device 2 may be constituted by a single camera or may be constituted by a plurality of cameras. The image capturing device 2 may include a device other than a camera. For example, the image capturing device 2 may include a distance measurement device using laser light or the like.

Further, the state of the image capturing device 2 may be controllable. The state of an image capturing device refers to a state such as a position, an attitude, a focal length, an optical center, and distortion of the image capturing device. The position and attitude of the image capturing device may be controlled by the image capturing device itself or may be controlled by a camera pan head that controls the position and attitude of the image capturing device.

The image capturing device 2 has a unique identification number for identifying the image capturing device 2 from other image capturing devices. The image capturing device 2 may have other functions such as a function of extracting a foreground image from an acquired captured image, and may also include hardware (such as a circuit or a device) that implements the functions.

The shape estimation device 3 generates shape data representing the shape of a subject on the basis of image data acquired from the image capturing device 2. In the present embodiment, the shape estimation device 3 generates three-dimensional shape data representing the three-dimensional shape of a subject. A method for generating three-dimensional shape data according to the present embodiment will be described hereinafter.

First, a plurality of image devices 2 capture the image-capturing area from different directions to acquire a plurality of captured images. Then, a foreground image obtained by extracting a foreground region corresponding to an object such as a person or a ball and a background image obtained by extracting a background region other than the foreground region are acquired from the plurality of captured images. The foreground image is an image obtained by extracting a region (foreground region) of an object from a captured image acquired by an image capturing device. The object to be extracted as the foreground region refers to a dynamic object (moving object) that moves (with the position or shape changeable) in images captured in a time-series manner from the same direction. For example, in a game, the object may include a person such as a player or a referee in a field where the game is being played. In a ball game, the object may also include a ball or the like in addition to the person. In a concert, an entertainment event, or the like, a singer, a player, a performer, a moderator, or the like is an example of the object. If the background is registered in advance using a background image or the like, a stationary object is also extracted as a foreground region if the background registered in advance does not include the object.

The background image is an image of a region (background region) different from at least an object serving as the foreground. Specifically, the background image is an image obtained by removing the object serving as the foreground from the captured image. The background refers to a target to be captured that is stationary or remains substantially stationary in images captured in a time-series manner from the same direction. Such a target to be captured is, for example, a stage of a concert or the like, a stadium where an event such as a game is played, a structure such as a goal used in a ball game, a field, or the like. The background is a region different from at least an object serving as the foreground, and the target to be captured may include another object or the like in addition to the object and the background. A process for generating the foreground image and the background image from the captured image may be performed by the shape estimation device 3 or the image capturing device 2. When the process is to be performed by the image capturing device 2, the image capturing device 2 outputs the foreground image and the background image to the shape estimation device 3.

The shape estimation device 3 uses the foreground image to generate three-dimensional shape data of a subject, which is the foreground, by using a shape estimation method such as a visual hull method (shape-from-silhouette method). Examples of the three-dimensional shape data include point cloud model data, billboard data, and mesh model data. In the following description, the three-dimensional shape data of the subject is also referred to as a subject model. Further, the shape estimation device 3 uses the foreground image to generate texture data for coloring the three-dimensional shape data. The three-dimensional shape data of the background is generated by three-dimensional measurement of an image-capturing area such as a stadium or a venue in advance. The shape estimation device 3 generates, based on the background image, texture data for coloring the three-dimensional shape data of the background. The shape estimation device 3 transmits the generated three-dimensional shape data and texture data to the storage device 4.

The virtual viewpoint video according to the present embodiment is generated by using the following method, for example. That is, the texture data is mapped to the three-dimensional shape data of the foreground in accordance with the parameters of the position and attitude of the virtual camera, and the resulting three-dimensional shape data of the foreground is rendered to generate virtual viewpoint video. The three-dimensional shape data of the background is also rendered in a similar manner. The method for generating virtual viewpoint video is not limited to this method, and various methods can be used, such as a method for generating virtual viewpoint video by projective transformation of a captured image without using three-dimensional shape data.

In the following description, data to be used to generate virtual viewpoint video, such as three-dimensional shape data and texture data, is also collectively referred to as material data. While the present embodiment describes a configuration for generation of three-dimensional shape data, the present embodiment can also be applied to image-based rendering performed as a method for generating virtual viewpoint video.

The storage device 4 is a device that stores material data generated by the shape estimation device 3. The storage device 4 is constituted by, for example, a semiconductor memory, a magnetic recording device, or the like. Each piece of material data stored in the storage device 4 is linked to corresponding image capturing time information. Specifically, image capturing time information associated with a captured image used to generate material data is associated with the material data to provide a link between the material data and the image capturing time information. The association of image capturing time information with material data is performed by, for example, attaching the image capturing time information to the metadata of the material data. The image capturing time information may be attached by using any device such as the shape estimation device 3 or the storage device 4. The storage device 4 outputs material data in response to a request from another device.

The model operation device 5 is a device that issues an instruction to set three-dimensional shape data of the background and arrange three-dimensional shape data of a subject on the set three-dimensional shape data of the background. Examples of the setting of the three-dimensional shape data of the background include setting of a coordinate system for the background in the virtual viewpoint video, and determination of the three-dimensional shape data of the background. The arrangement of the three-dimensional shape data of the subject is designated by the user (operator) through, for example, a joystick, a jog dial, a touch panel, a keyboard, a mouse, or the like. In response to an instruction from the user, the model operation device 5 outputs arrangement information representing the arrangement of three-dimensional shape data. The arrangement information includes information such as the position and orientation of the three-dimensional shape data, but this is not a limitation.

The model operation device 5 displays, based on the setting and arrangement information of the three-dimensional shape data of the background designated by the user, video representing a three-dimensional space where the background and the subject are arranged. While referring to the displayed three-dimensional space, the user examines the setting of the three-dimensional shape data of the background and the arrangement of the three-dimensional shape data of the subject. The model operation device 5 transmits the set arrangement information to the virtual camera path data processing apparatus 1. The designation of the arrangement information of the subject model is not limited to designation by the user. The arrangement information of the subject model may be automatically designated by, for example, recognizing the subject by using video analysis or the like.

The virtual camera operation device 6 is an operation device for designating parameters of the position and attitude of the virtual camera. The virtual camera operation device 6 is constituted by, for example, a joystick, a jog dial, a touch panel, a keyboard, a mouse, and the like. The parameters of the virtual camera, which can be designated, include, but are not limited to, information such as the position, attitude, and angle of view of the virtual camera. Any other information may be designated.

The virtual camera operation device 6 according to the present embodiment transmits virtual camera parameters designated by the user to the model operation device 5. The model operation device 5 generates a virtual viewpoint image, based on the received virtual camera parameters and the material data acquired from the storage device 4. The user who operates the virtual camera operation device 6 designates virtual camera parameters while referring to virtual viewpoint video representing the three-dimensional space, which is displayed by the model operation device 5, and examines a virtual camera path. The displayed video may be any video that assists the user in designating the virtual camera parameters, and may be, for example, a simple model of the subject or simple video using a marker or the like indicating only the position of the subject. Alternatively, the virtual camera parameters may be designated without video being generated and displayed. The designation of the virtual camera parameters is not limited to designation by the user. The virtual camera parameters may be automatically designated by, for example, recognizing the subject. The virtual camera parameters designated with the virtual camera operation device 6 are transmitted to the virtual camera path data processing apparatus 1.

The virtual camera operation device 6 can further designate an image capturing time of the subject in the video in accordance with the user's operation. Specifically, the user can pause the movement of the subject, play back the movement of the subject in reverse, or fast forward the movement of the subject in the video displayed on the virtual camera operation device 6. These operations correspond to pause, reverse playback, and fast forward of the image capturing time when the image capturing device 2 captures an image. The virtual camera can be operated even when the image capturing time is changed. Thus, virtual viewpoint video can be generated such that the virtual camera is moved while the movement of the subject is paused, for example. In addition, even in a case where continuous image capturing is not performed, a case where image capturing is performed with an interval for each subject, or the like, the image capturing time information can be referred to, thereby enabling generation of virtual viewpoint video including subjects whose images are captured at different times. In such video, the image capturing time and the playback time on the virtual viewpoint video are handled as independent parameters.

The virtual camera operation device 6 transmits image capturing time information representing an image capturing time corresponding to displayed video to the virtual camera path data processing apparatus 1.

The sequence data processing device 7 acquires the virtual camera path data from the virtual camera path data processing apparatus 1. The sequence data processing device 7 further acquires material data corresponding to the virtual camera path data from the storage device 4. Then, the sequence data processing device 7 generates sequence data for storing or outputting the acquired data. The format of the sequence data will be described below. The material data is optional, and sequence data of only the virtual camera path data may be generated. Further, the virtual camera path may include virtual camera path data of not only one pattern but also a plurality of patterns.

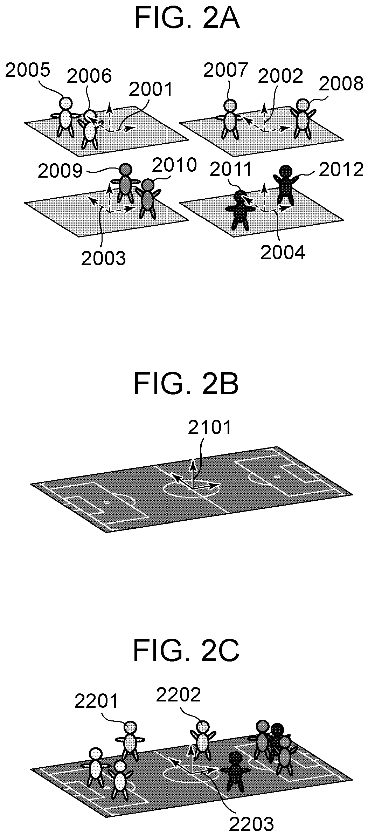

The foregoing describes the configuration of the information processing system according to the present embodiment. The problem to be overcome by the present system will now be described with reference to Figs. 2A to 2F. Figs. 2A to 2F are illustrations describing the relationship between arrangement information of a subject model and coordinate system adjustment information. As a premise, for example, the generation of virtual viewpoint video including a plurality of subjects may have a problem in that the plurality of subjects are difficult to simultaneously capture in the same image-capturing area due to limited space or the like for capturing images. In this case, a possible method is to capture a plurality of subjects in different locations or at different times and change the positions of the three-dimensional shape data of the captured subjects such that the subjects can be included in single virtual viewpoint video. However, in the generation of virtual viewpoint video by rendering in accordance with the virtual camera parameters, as described above, it may be difficult to generate appropriate virtual viewpoint video simply by moving the three-dimensional shape data of the subjects and determining the virtual camera parameters. More specifically, texture data for coloring three-dimensional shape data of a subject is determined based on pixel values of a captured image specified in accordance with the position and attitude of a virtual camera. Accordingly, if the positions of the three-dimensional shape data of the subjects are moved, it may be difficult to refer to appropriate pixel values of the captured images. As a result, appropriate virtual viewpoint video may be difficult to obtain.

The virtual camera path data processing apparatus 1 according to the present embodiment generates virtual camera path data including coordinate system adjustment information as information for adjusting the virtual camera path on the basis of the position of three-dimensional shape data of a subject. Thus, also in the method for generating virtual viewpoint video according to the present embodiment, information capable of generating desired virtual viewpoint video is output. The coordinate system adjustment information will be described hereinafter.

Fig. 2A illustrates an example of coordinate systems 2001 to 2004 of a three-dimensional space corresponding to an image-capturing space at the time of image capture, the image-capturing space being captured in the same location during different time slots, and pieces of three-dimensional shape data (hereinafter, also referred to as subject models) 2005 to 2012 of the subjects. The coordinate systems of a three-dimensional space at the time of image capture are the same if the imaging devices have the same configuration and the same calibration data. It is assumed here that the coordinate systems 2001 to 2004 are the same, for convenience of description. However, the coordinate systems 2001 to 2004 may be different. It is also assumed that the subject model 2005 and the subject model 2006 are captured at the same time. It is also assumed that the subject model 2007 and the subject model 2008 are captured at the same time, the subject model 2009 and the subject model 2010 are captured at the same time, and the subject model 2011 and the subject model 2012 are captured at the same time. However, it is assumed that the four sets of subject models described above are captured at different times. The number of subjects included at the time of image capture is not limited to two, and may be one or more than two.

Fig. 2B illustrates an example of a coordinate system 2101 of a three-dimensional space of CG or a three-dimensional space of another image-capturing space, which is different from the coordinate systems 2001 to 2004. Fig. 2B is set as the background for arranging the subject models. Fig. 2C illustrates an example in which the subject models 2005 to 2012 are arranged on the background corresponding to the coordinate system 2101 in accordance with the user's instruction. In Fig. 2C, subject models 2201 and 2202 correspond to the subject models 2007 and 2008, respectively, and a coordinate system 2203 corresponds to the coordinate system 2101. In Fig. 2C, for simplicity, but not limitation, all the subject models captured at the same time are included, and the positional relationships therebetween are maintained. For example, the relative positional relationship of the subject model 2202 with respect to the subject model 2201 may be changed, only the subject model 2201 may be arranged, or a duplicate copy of the subject model 2201 may be arranged. In this case, the positional relationship and the number of subjects in the three-dimensional space at the time of image capture change. Thus, also storing information on a subject model or a target region to be rendered as virtual viewpoint video makes it possible to obtain desired virtual viewpoint video. The model operation device 5 provides the display illustrated in Fig. 2C, which allows recognition of the three-dimensional space in which the subjects are arranged.

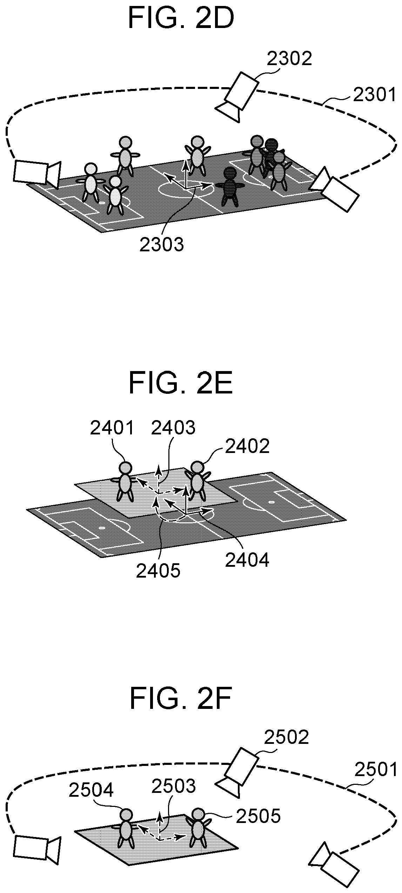

Fig. 2D illustrates an example of a virtual camera path 2301 for the three-dimensional space and the subject models illustrated in Fig. 2C. The virtual camera path 2301 is designated by, for example, the user operating the virtual camera operation device 6 while viewing the video displayed by the model operation device 3.

A virtual camera 2302 represents a virtual camera having a position, an attitude, and the like corresponding to a certain frame in the virtual camera path 2301. In Fig. 2D, a coordinate system 2303 corresponds to the coordinate system 2203 and the coordinate system 2101. The virtual camera path 2301 is created by using the coordinate system 2303 as a reference. At this time, the position of the virtual camera 2302 is assumed to be defined as (Xc, Yc, Zc) .

Fig. 2E is an illustration describing the difference between a coordinate system 2403 at the time of image capture and a different coordinate system 2404 for subject models 2401 and 2402. In Fig. 2E, the subject models 2401 and 2402 correspond to the subject models 2201 and 2202, respectively, and also correspond to the subject models 2007 and 2008, respectively. The coordinate system 2403 and the coordinate system 2002 correspond to each other and represent the same coordinate system. All of the coordinate system 2404, the coordinate system 2101, the coordinate system 2203, and the coordinate system 2303 correspond to each other and represent the same coordinate system. The positional relationship between each subject model and the coordinate system 2403 at the time of image capture of the subjects is always constant. Thus, if the position or orientation of each subject model changes, the position or orientation of the coordinate system 2403 is changed by the same amount as the amount of change in the position or orientation of the subject model. Accordingly, the rearrangement of each subject model to any position in the manner illustrated in Fig. 2C results in a change in orientation and positional relationship with the coordinate systems 2403 and 2404 in accordance with an amount 2405 of the change. For example, it is assumed that only the position of the subject model 2401 is changed. In this case, the amount 2405 of the change is expressed by (Xw - Xv, Yw - Yv, Zw - Zv) when the position (center of gravity) of the subject model 2401 is represented by (Xw, Yw, Zw) as viewed from the coordinate system 2404 and is represented by (Xv, Yv, Zv) as viewed from the coordinate system 2403. The amount 2405 of the change serves as coordinate system adjustment information.

Fig. 2F illustrates an example in which the virtual camera path 2301 in Fig. 2D is adjusted to a virtual camera path 2501 that is based on a coordinate system 2503. A virtual camera 2502 represents a virtual camera having a position, an attitude, and the like corresponding to a certain frame in the virtual camera path 2501, and the coordinate system 2503 corresponds to the coordinate systems 2303, 2203, and 2101. At this time, the position of the virtual camera 2502 after the adjustment is assumed to be defined as (XC, YC, ZC). Subject models 2504 and 2505 correspond to the subject models 2201 and 2202, respectively, correspond to the subject models 2007 and 2008, respectively, and correspond to the subject models 2401 and 2402, respectively. In the virtual camera paths 2501 and 2301, the relative position and orientation of each subject model as viewed from the virtual camera need to remain unchanged to generate the same virtual viewpoint video, except for the background. However, if the virtual camera path 2301 is applied to the coordinate system 2503 without any adjustment, the virtual camera 2502 is located at the position (Xc, Yc, Zc) in the coordinate system 2503. At this time, the values of Xc, Yc, and Zc are likely not to be the same as XC, YC, and ZC, respectively. If the values of Xc, Yc, and Zc are not the same as XC, YC, and ZC, respectively, the relationship between the relative positions and orientations of the respective subject models as viewed from the virtual camera is not maintained. Accordingly, when the positions of the subject models are changed, the position (Xc, Yc, Zc) of the virtual camera in the coordinate system 2503 needs to be adjusted. In Fig. 2F, the adjustment is performed by subtracting the amount 2405 of the change (Xw - Xv, Yw - Yv, Zw - Zv) from the coordinates (Xc, Yc, Zc).

As described above, as the positions of the subject models are moved, the position of the virtual camera is also moved to maintain the relative positional relationship between the virtual camera and the subject models. This makes it possible to refer to pixel values of an appropriate captured image to color the subject models.

In the example described above, only the position of the virtual camera is changed, but this is not a limitation. For example, if the orientations of the subject models are changed, a transformation matrix for changing the attitude of the virtual camera in accordance with the change in orientation is specified. This transformation matrix serves as coordinate system adjustment information. In the present embodiment, as described above, coordinate system adjustment information for changing at least one of the position and attitude of the virtual camera is acquired based on the arrangement information representing the positions and the orientations of the subject models.

### <Functional Configuration of Virtual Camera Path Data Processing Apparatus>

The configuration of the virtual camera path data processing apparatus 1 will be described with reference to Fig. 1. The virtual camera path data processing apparatus 1 includes a virtual camera information acquisition unit 101, a coordinate system adjustment information acquisition unit 102, a virtual camera path data generation unit 103, and a virtual camera path data output unit 104.

The virtual camera information acquisition unit 101 acquires the virtual camera parameters designated with the virtual camera operation device 6. The virtual camera information acquisition unit 101 may collectively acquire the virtual camera parameters for all the frames determined with the virtual camera operation device 6 or may continuously acquire the virtual camera parameters for each frame each time the virtual camera operation device 6 outputs the virtual camera parameters for one of the frames.

The virtual camera information acquisition unit 101 according to the present embodiment also acquires image capturing time information corresponding to the time at which an image of the subject is captured. The image capturing time information according to the present embodiment is an absolute time based on a certain standard time, but this is not a limitation. The image capturing time information may be represented by, for example, a relative time based on a certain reference time, the number of relative frames with respect to a frame corresponding to the certain reference time, and the like. Alternatively, for example, when material data corresponding to a predetermined scene at the time of image capture (for example, the 45-minute first half of a soccer game) or a certain game is collectively managed, a relative time based on the start timing of the scene or the game may be used as the image capturing time information.

Since the image capturing time information is information used for specifying material data corresponding to a certain frame, information other than the image capturing time information may be acquired if the material data can be specified. For example, an identification number or an ID for specifying the material data is assigned. In this case, the virtual camera information acquisition unit 101 may be configured to acquire the identification number, the ID, and the like of the material data instead of the image capturing time information. The virtual camera information acquisition unit 101 may collectively acquire the image capturing time information of all the frames determined with the virtual camera operation device 6, or may continuously acquire the image capturing time information for each frame.

The coordinate system adjustment information acquisition unit 102 acquires arrangement information of a subject model designated by the model operation device 5, and specifies the position and orientation of the subject in the virtual viewpoint video in accordance with the acquired arrangement information. The coordinate system adjustment information acquisition unit 102 further acquires coordinate system adjustment information based on the arrangement information. The model operation device 5 may be configured to acquire coordinate system adjustment information, and the coordinate system adjustment information acquisition unit 102 may be configured to acquire the coordinate system adjustment information acquired by the model operation device 5.

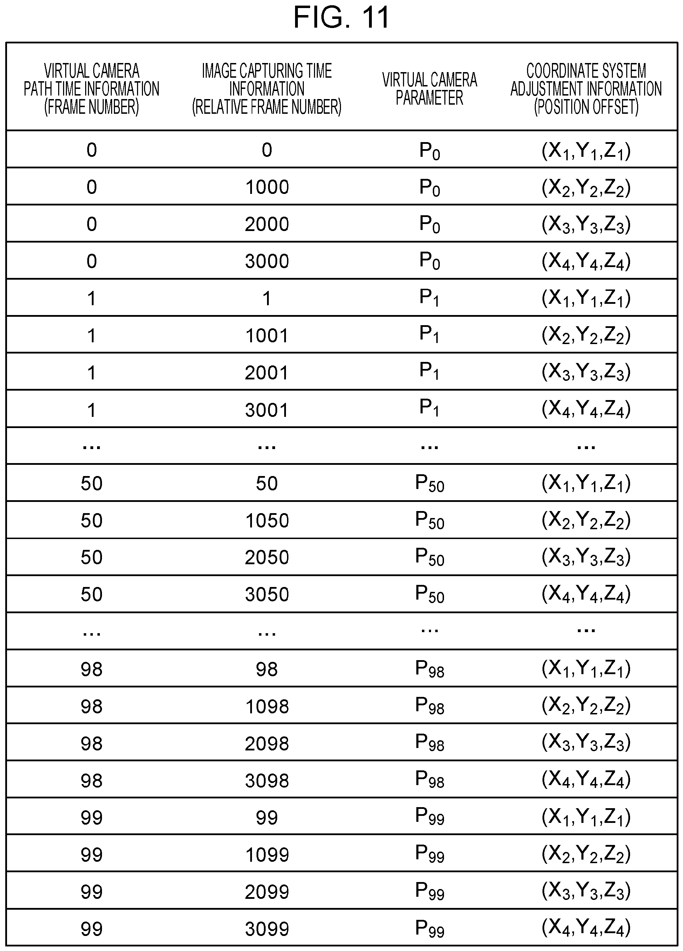

The virtual camera path data generation unit 103 associates the virtual camera parameters acquired by the virtual camera information acquisition unit 101 with the coordinate system adjustment information acquired by the coordinate system adjustment information acquisition unit 102 to generate virtual camera path data. The concept of the virtual camera path data will be described with reference to Fig. 11. Fig. 11 illustrates an example of virtual camera path data that stores coordinate system adjustment information for the virtual camera path 2301 in the Fig. 2D. Virtual camera path time information is information representing the numbers of the frames constituting the virtual camera path. The illustrated example indicates that the virtual camera path includes 100 frames and includes, for each frame, four types of coordinate system adjustment information of the virtual camera. The coordinate system adjustment information is given as a position offset for adjusting the position of the virtual camera. Virtual camera parameter information includes, for example, the position (x, y, z) of the virtual camera in the three-dimensional space, and pan, tilt, and roll values (pan, tilt, roll) representing the attitude of the virtual camera in the three-dimensional space. The virtual camera path data may include parameters corresponding to the angle of view and distortion of the virtual camera.

Image capturing time information is information for specifying material data to be used to generate virtual viewpoint video. In the example in Fig. 11, the image capturing time information is represented by a frame number representing the number of relative frames with respect to a frame of a predetermined captured image. In the example in Fig. 11, for example, the virtual camera path time information 0 corresponds to four pieces of image capturing time information of the subject, namely, 0, 1000, 2000, and 3000. That is, it is indicated that four pieces of material data are to be used for generating a frame of virtual viewpoint video corresponding to the virtual camera path time information 0. The virtual camera path data processing apparatus 1 according to the present embodiment generates virtual camera path data as illustrated in Fig. 11. A method of using the virtual camera path data will be described below in Embodiment 2.

Referring back to Fig. 1, the virtual camera path data output unit 104 performs processing for attaching header information or the like to the virtual camera path data generated by the virtual camera path data generation unit 103, and outputs the resulting virtual camera path data. The virtual camera path data may be output as a data file or may be output as packet data. The virtual camera path data may also be output per frame, or may be output for the entire virtual camera path or for each predetermined number of frames.

### <Format of Virtual Camera Path Data>

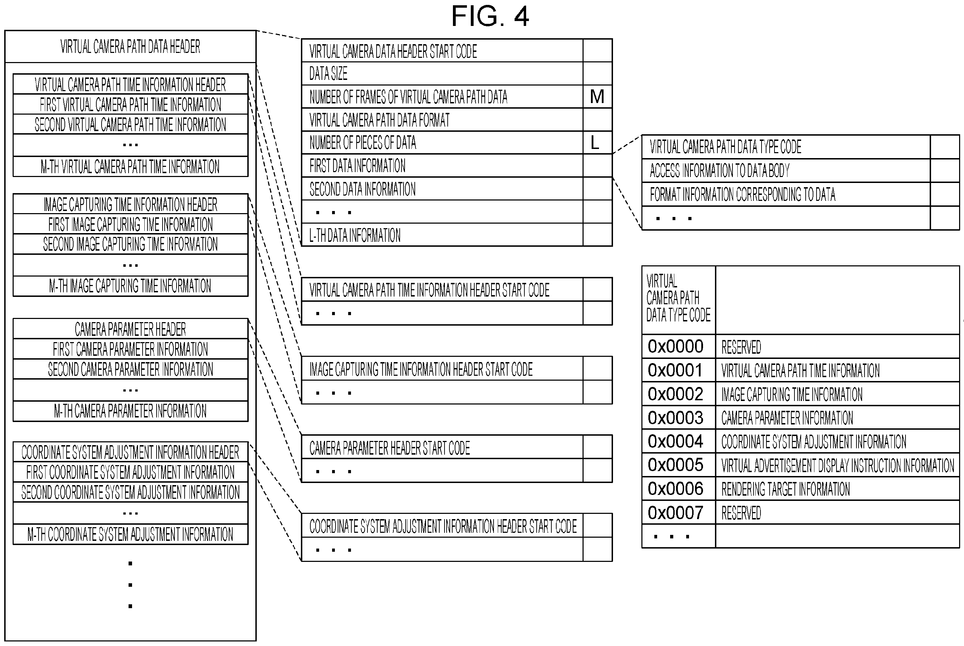

Fig. 4 illustrates an example of the format of the virtual camera path data generated by the virtual camera path data processing apparatus 1. The virtual camera path data processing apparatus 1 generates a file corresponding to a predetermined format described below.

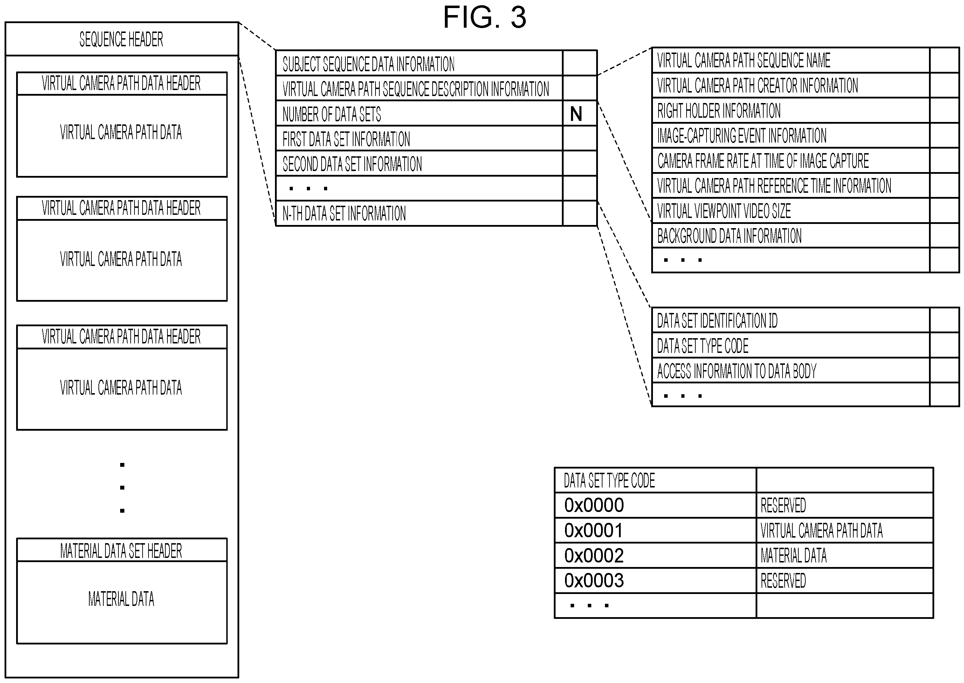

The virtual camera path data illustrated in Fig. 4 is an example of a data set having virtual camera parameters for a predetermined number of frames. The data set contains, at the beginning thereof, a virtual camera path data header. The header stores information indicating that this data set is a data set of virtual camera path data, and the data size of the data set. Subsequently, the number of frames M of the stored virtual camera path data is described. Then, information on the format of the virtual camera path data is described. This is information representing the format of how the virtual camera path data is stored, and is information indicating whether the data relating to the virtual camera path is stored per type or per frame. Fig. 3 illustrates an example of data stored per type. In the virtual camera path data header, subsequently, the number of pieces of data is described as L. Subsequently, information on each piece of data is stored. In the present embodiment, four pieces of data, namely, virtual camera path time information, image capturing time information, camera parameter information, and coordinate system adjustment information, are included. The virtual camera path time information is information representing frames in the virtual camera path, and corresponds to the camera path frames in Fig. 11 described above. That is, the virtual camera path time information is represented by any information capable of distinguishing the frames in the virtual camera path.

Information per data of the virtual camera path first stores a type code of the data. In the present embodiment, data sets include virtual camera path time information, image capturing time information, camera parameter information, and virtual advertisement display instruction information. Each data set is expressed as a virtual camera path data type code. The virtual camera path data type code is represented as a 1-byte code, as illustrated in Fig. 3. However, the data type and code are not limited to this. For example, the virtual camera path data type code may be a code longer than 2 bytes or a code shorter than 2 bytes depending on the information to be described. Other data to be used to generate the virtual viewpoint video may be used. The virtual advertisement display instruction information is instruction information for displaying a virtual advertisement, as additional information, on the virtual viewpoint video generated by using the virtual camera path data. The virtual advertisement is an example of additional information. In addition to the virtual advertisement, for example, instruction information for attaching any additional information such as information about a subject or an effect may be described in the virtual camera path data.

Subsequently, access information (pointer) to each piece of data is stored. Subsequently, format information related to data such as image capturing time information and camera parameter information is described. For example, the format of the virtual camera path time information indicates a relative time, a relative frame number, or the like with respect to the beginning. The format of the image capturing time information may be a format using an absolute time, based on a certain standard time (for example, Greenwich Mean Time or Japan Standard Time), of the time when the subject is actually captured, a relative time with respect to a certain reference time, the number of relative frames with respect to a reference frame, or the like. Alternatively, the format of the image capturing time information may be a format using information other than image capturing time information, and, for example, a file path or a pointer to material data may be used. When the relative time with respect to a reference time or the number of relative frames is described as the image capturing time information, reference time information of the virtual camera path is described in the virtual camera path sequence description in a sequence header. The reference time information is stored as an absolute time based on a certain standard time, an absolute time based on a management time in certain content (for example, a start time of a predetermined game), or the like. Specifically, for example, the year, month, day, hour, minute, and second may be represented by integers, and the time value after the decimal point may be represented by a floating-point value, a fixed-point value, an integer value, or the like.

In the format of the virtual camera parameters, for example, a value representing the position, the attitude, or the like of the virtual camera is represented as a quaternion. The virtual camera parameters may be represented by any other method.

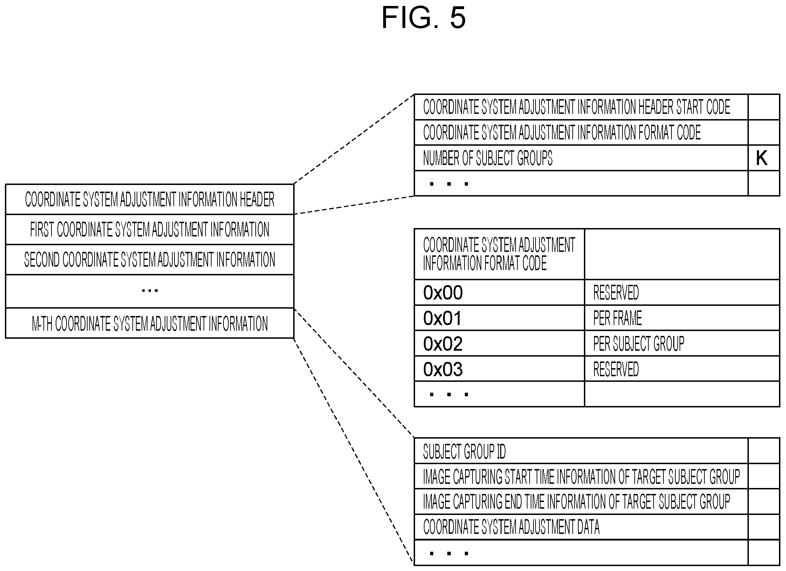

The format of the coordinate system adjustment information is represented by, for example, position offset information of the virtual camera or transformation matrix information representing a transformation of the position or attitude of the camera. The virtual camera path time information and the camera parameter information correspond to each other on a one to-one basis. However, the virtual camera path time information and the image capturing time information may correspond to each other on a one to-many basis in accordance with the number of subjects whose coordinate systems are to be adjusted. For example, in Fig. 2D, assuming that the subjects in each image-capturing space are set as a subject group, one piece of virtual camera path time information corresponds to four subject groups of the image capturing time information. Further, the coordinate system adjustment information may be given per designated image capturing time slot rather than per frame. For example, in Fig. 2D, if the coordinate system adjustment information does not change over the respective image capturing time slots of the four subject groups, the number of pieces of coordinate system adjustment information may be four rather than M × 4. That is, a coordinate system adjustment information data set having a format as illustrated in Fig. 5 may be used. A coordinate system adjustment information format code may be described in the format information of the data information in the virtual camera path data header illustrated in Fig. 4. When the number of subject groups K is 1, the information included in the coordinate system adjustment information may be only coordinate system adjustment data.

Subsequently, actual data of each piece of data of the virtual camera path is described in accordance with the format described in the virtual camera path data header. At the beginning of each piece of data, a start code indicating the start of the data is described.

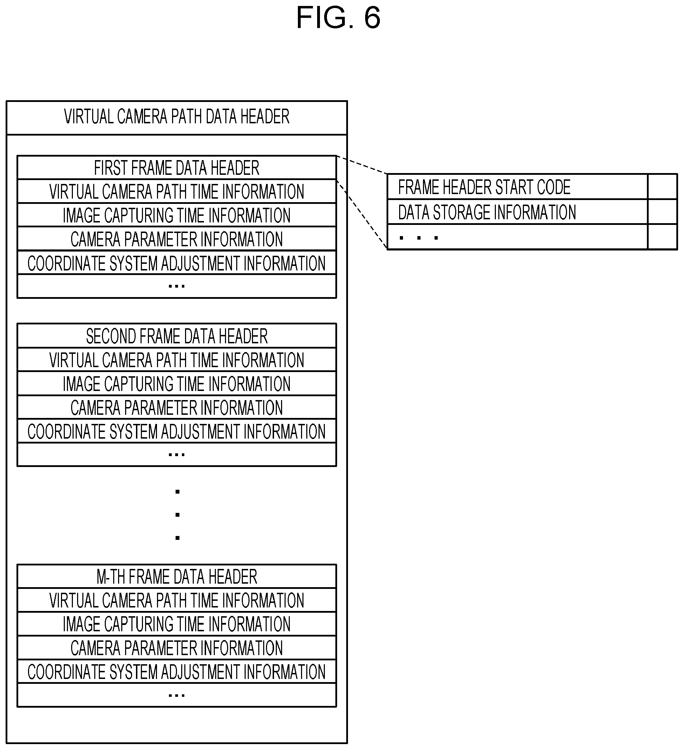

Fig. 6 is a diagram for describing another example configuration of the virtual camera path data. In Fig. 4, the various pieces of data included in the virtual camera parameters are stored per frame. In data storage per frame, a frame data header is stored at the beginning of each piece of frame data, and a code indicating the start of the frame data and information representing what kind of data and in what order the frame data stores are described.

Various pieces of data stored per frame are advantageous in that data can be easily extracted per frame, for example, when some frames of the virtual camera path data are to be extracted and used to generate virtual viewpoint video.

Fig. 3 is a diagram illustrating an example format of sequence data output from the sequence data processing device 7. The sequence data processing device 7 outputs sequence data including a plurality of pieces of virtual camera path data for generating single virtual viewpoint video. The sequence data also includes material data to be used to generate the virtual viewpoint video. For example, the sequence is generated for each video clip or shot cut. The configuration of the sequence data including the virtual camera path data and the material data allows an apparatus to generate virtual viewpoint video upon receipt of the sequence data.

Each sequence includes a sequence header, and the sequence header stores information capable of specifying corresponding material sequence data. For example, but not limitation, a sequence header start code relating to material data that can uniquely specify the material sequence data, information about the location and date (year, month and day) where and when the subject is captured, path information representing the location of the material sequence data, and the like are stored. The sequence header further includes information indicating that the virtual camera path data described above is included. The information may be, for example, information indicating a data set included in the sequence header or information representing the presence or absence of virtual camera path data.

Subsequently, information about the entire sequence data of the virtual camera path is stored. For example, information on the creator of the virtual camera path, right holder information, the sequence name, the name of the event in which the subject is captured, the camera frame rate at which the subject is captured, and the like can be included in virtual camera path sequence description information. The virtual camera path sequence description information can further include, for example, time information on which the virtual camera camera path is based, an image size assumed for the rendering of the virtual viewpoint video, background data information, and the like. However, not all of these pieces of information need be included, and any of these pieces of information may be included.

In the sequence, each piece of virtual camera path data is stored per data set. The number of data sets N is described in the sequence header. Subsequently, information on each data set is stored. In the present embodiment, two data sets, namely, virtual camera path data and material data, are included. The information on each data set is assigned first an identification ID of the data set. As the identification ID, a unique ID is assigned to each of all the data sets. Subsequently, the type code of the data set is stored. In the present embodiment, the data sets include a data set representing virtual camera path data and data representing material data. Each data set is expressed as a data set type code. The data set type code is expressed as a 2-byte code illustrated in Figs. 2A to 2F. However, the data type and code are not limited to this. Other data to be used to generate the virtual viewpoint video may be used. Subsequently, a pointer to the data set is stored. However, any information for accessing each data set may be used and is not limited to the pointer. For example, a file name in a file system constructed in the storage device 4 may be used.

The sequence data processing device 7 may generate sequence data including only virtual camera path data or generate sequence data including only material data. Since the sequence data is generated, data to be used to generate single virtual viewpoint video such as a video clip can be collectively managed as one piece of data.

In accordance with the format described above, data including coordinate system adjustment information for changing the position and attitude of the virtual camera and a plurality of virtual camera parameters corresponding to the frames constituting the virtual viewpoint video is generated. The format described above is an example, and the configuration and information to be included are not limited to those described above.

### <Process Flow>

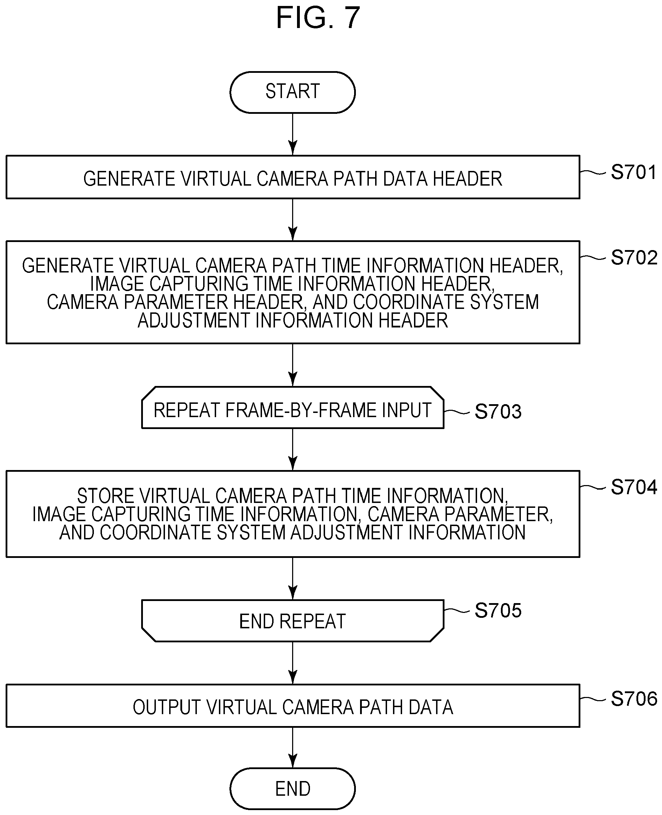

The operation of the virtual camera path data generation processing apparatus 1 according to the present embodiment will be described with reference to a flowchart in Fig. 7. The process illustrated in Fig. 7 is implemented by the CPU 1201 reading and executing a program stored in the ROM 1202 or the external storage device 1206. The process is started in response to receipt of an instruction or the like from the virtual camera operation device 6 to generate virtual camera path data.

In step S701, the virtual camera path data generation unit 103 generates header information for generating the virtual camera path data, and sets the header information as the header of the virtual camera path data. In step S702, the virtual camera information acquisition unit 101 and the coordinate system adjustment information acquisition unit 102 acquire pieces of data information of a virtual camera path, namely, virtual camera path time information, image capturing time information, camera parameter information, and coordinate system adjustment information, from the virtual camera operation device 6. Further, the virtual camera path data generation unit 103 generates the header of each piece of data.

In step S703, data storage per frame is repeated from the start time point of the virtual camera path. In step S704, the virtual camera path data generation unit 103 that stores the coordinate system adjustment information acquired by the coordinate system adjustment information acquisition unit 102 for virtual camera information acquired by the virtual camera information acquisition unit 101 to generate virtual camera path data. In step S705, steps S703 to S704 are repeated until the virtual camera path is completed or the frame-by-frame input is completed. In step S706, the virtual camera path data output unit 104 stores header information and the like for the virtual camera path generated by the virtual camera path data generation unit 103, and outputs final virtual camera path data.

The data to be exchanged at a time may be per frame or may be collectively per multiple frames or per virtual camera path. For example, the virtual camera information acquisition unit 101 may receive virtual camera information per frame or per multiple frames. When the process is to be collectively performed per multiple frames, coordinate system adjustment information for each subject model may be collectively described in a coordinate system adjustment information data set on a per-subject basis.

The process described above enables generation of virtual camera path data from which virtual viewpoint video can be generated in consideration of a change in the position of a subject model.

### (Embodiment 2)

The present embodiment describes an example of a process for generating virtual viewpoint video based on the virtual camera path data generated by the virtual camera path data processing apparatus 1 according to the first embodiment.

### <System Configuration, and Functional Configuration of Virtual Viewpoint Video Generation Apparatus>

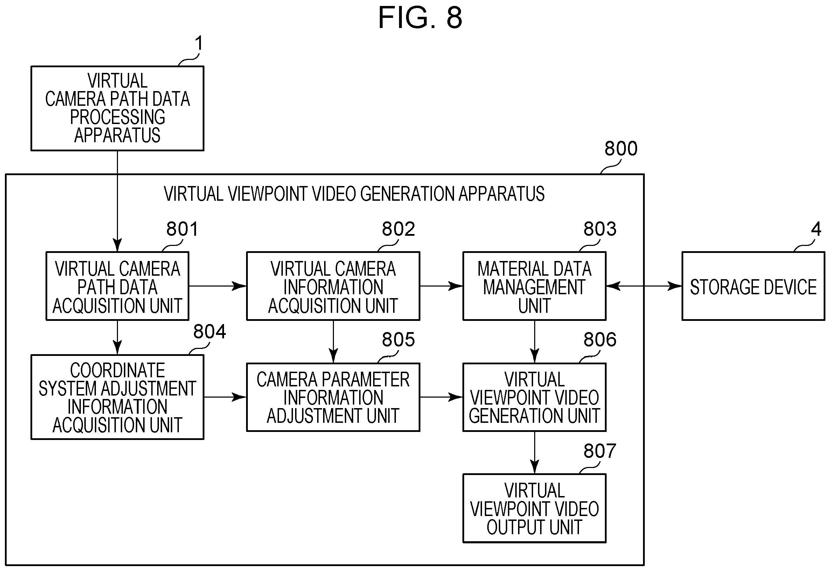

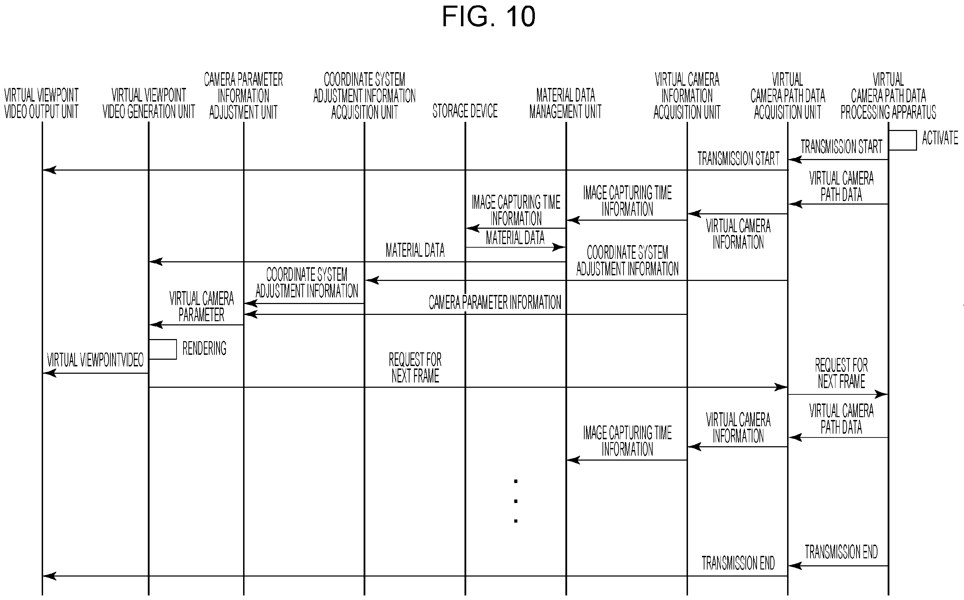

Fig. 8 is a diagram illustrating an example configuration of a system including a virtual viewpoint video generation apparatus according to the present embodiment. A virtual viewpoint video generation apparatus 800 is connected to the virtual camera path data processing apparatus 1 and the storage device 4. The configurations of the virtual camera path data processing apparatus 1 and the storage device 4 are similar to those in Embodiment 1. In the following, no description will be given of the same configuration as that of Embodiment 1. The hardware configuration of the virtual viewpoint video generation apparatus 800 is similar to the hardware configuration illustrated in Fig. 10. The virtual viewpoint video generation apparatus 800 may be included in the information processing system 10 according to Embodiment 1.

The virtual viewpoint video generation apparatus 800 includes a virtual camera path data acquisition unit 801, a virtual camera information acquisition unit 802, a material data management unit 803, a coordinate system adjustment information acquisition unit 804, a camera parameter information adjustment unit 805, a virtual viewpoint video generation unit 806, and a virtual viewpoint video output unit 807. The virtual viewpoint video generation apparatus 800 according to the present embodiment acquires virtual camera path data from the virtual camera path data processing apparatus 1, and generates virtual viewpoint video based on the acquired virtual camera path data. Each processing unit will be described hereinafter.

The virtual camera path data acquisition unit 801 acquires virtual camera path data output from the virtual camera path data processing apparatus 1. The virtual camera path data acquisition unit 801 may acquire the virtual camera path data output from the virtual camera path data processing apparatus 1 as a data file or packet data. The virtual camera path data acquisition unit 801 may acquire the virtual camera path data per frame, per predetermined number of frames, or per one or more virtual camera path data sets. When a plurality of virtual camera path data sets are acquired, the virtual viewpoint video output unit 807, described below, can distinguish and output respective virtual viewpoint videos corresponding to the virtual camera path data sets. The virtual camera path data sets can be distinguished by identification IDs described in the respective headers of the virtual camera path data sets. The virtual viewpoint video output unit 807, described below, may perform a process for assigning an identification ID described in a virtual camera path data set to metadata of virtual viewpoint video to be output.

The virtual camera information acquisition unit 802 acquires the camera parameters of a virtual camera from the virtual camera path data acquired by the virtual camera path data acquisition unit 801. The virtual camera information acquisition unit 802 further acquires image capturing time information corresponding to the virtual camera path time information included in the virtual camera path data. The present disclosure is not limited to this, and instruction information for attaching certain additional information such as a virtual advertisement or information on a target to be rendered may also be acquired.

The material data management unit 803 acquires, from the storage device 4, material data corresponding to the image capturing time information acquired by the virtual camera information acquisition unit 802. As described in Embodiment 1, material data is associated with image capturing time information. Thus, the material data management unit 803 can refer to the image capturing time information associated with the material data to acquire the material data. The material data management unit 803 holds the acquired material data in correspondence with the virtual camera path data set and virtual camera path time information.

The material data acquired by the material data management unit 803 is necessary material data that is acquired in accordance with a method of generating virtual viewpoint video by using the virtual viewpoint video generation unit 806. For example, in a generation method based on a foreground model or a background model, point cloud model data or mesh model data of the foreground or the background, a texture image corresponding thereto, a captured image for generating a texture, and camera calibration data are acquired. In a generation method not using a foreground model or a background model, a captured image, camera calibration data, and the like are acquired.

The coordinate system adjustment information acquisition unit 804 acquires, from the virtual camera path data acquired by the virtual camera path data acquisition unit 801, coordinate system adjustment information for adjusting the coordinate system of the virtual camera. The camera parameter information adjustment unit 805 changes the virtual camera parameters in accordance with the coordinate system adjustment information acquired by the coordinate system adjustment information acquisition unit 804.

The virtual viewpoint video generation unit 806 generates virtual viewpoint video by using the virtual camera parameters changed by the camera parameter information adjustment unit 805 and the material data acquired by the subject data management unit 803. The virtual camera parameters and material data to be used are associated with each other. The virtual camera parameters and the material data, which are associated with each other, are specified by, for example, referring to the same virtual camera path time information.

An example of a method for generating virtual viewpoint video based on virtual camera path data will now be described. First, the camera parameter information adjustment unit 805 changes (adjusts) the virtual camera parameters in accordance with the coordinate system adjustment information corresponding to each piece of image capturing time information. Further, the virtual viewpoint video generation unit 806 independently generates virtual viewpoint video by using material data corresponding to each piece of image capturing time information in accordance with the virtual camera parameters whose coordinate systems have been adjusted. At this time, distance images representing the distances from the virtual camera to the subject models for each virtual viewpoint video are also generated. Then, the virtual viewpoint video generation unit 806 combines, based on the plurality of virtual viewpoint videos generated independently and the also generated distance images, the plurality of virtual viewpoint videos such that a subject model closer to the position of the virtual camera takes a more foreground position.

A description will be given taking the virtual camera path data illustrated in Fig. 11 as an example. For the virtual camera path time information 0, the camera parameter information adjustment unit 805 adjusts a virtual camera parameter P0 in accordance with the coordinate system adjustment information corresponding to each of the four pieces of image capturing time information. The virtual viewpoint video generation unit 806 generates four virtual viewpoint videos by using the four virtual camera parameters whose coordinate systems have been adjusted and the pieces of material data corresponding to the image capturing times 0, 1000, 2000, and 3000. At this time, distance images representing the distances from the virtual camera to the subject models for each virtual viewpoint video are also generated. The virtual viewpoint video generation unit 806 combines, based on the generated four virtual viewpoint videos and the also generated distance images, the four virtual viewpoint videos such that a subject model closer to the position of the virtual camera takes a more foreground position. Accordingly, the four virtual viewpoint videos corresponding to the same virtual camera path time information of 0 are combined to generate a frame of one virtual viewpoint video. Similar processing is performed on the frames corresponding to the other pieces of virtual camera path time information to finally generate 100 frames of virtual viewpoint videos.

The processing described above is performed to generate one virtual viewpoint video. The generation method described above involves, but not limited to, combining processing after independently generating virtual viewpoint videos for the respective pieces of image capturing time information. For example, virtual viewpoint videos based on the respective pieces of image capturing time information may be sequentially generated and may be sequentially overwritten in accordance with the distances from the virtual camera to the subject models. As a premise, a coloring method for generating virtual viewpoint video is implemented as coloring based on virtual camera information, resulting in a higher-quality image. However, any other method such as typical texture mapping may be used.

The virtual viewpoint video output unit 807 acquires virtual viewpoint video from the virtual viewpoint video generation unit 806 and outputs the virtual viewpoint video by using a display device such as a display. The virtual viewpoint video output unit 807 may output the virtual viewpoint video acquired from the virtual viewpoint video generation unit 806 as an image data file or packet data.

### <Process Flow>

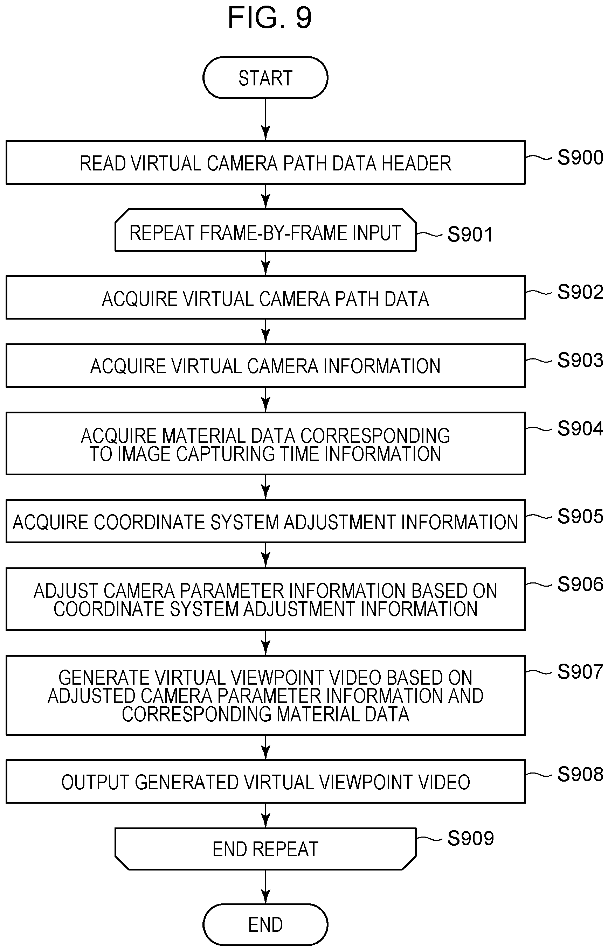

The operation of the virtual viewpoint video generation apparatus having the configuration described above will be described with reference to a flowchart in Fig. 9. The process is started in response to the virtual viewpoint video generation apparatus 800 acquiring virtual camera path data. In step S900, a camera path data header is read from the virtual camera path data. On the basis of header information, for example, a memory required for the process is secured. Subsequently, each piece of data information is read, and the header of each piece of information and access information of the data are acquired.

In step S901, the virtual viewpoint video generation apparatus 800 repeats acquisition of frames input on a frame-by-frame basis from the start of the virtual camera path. In step S902, the virtual camera path data acquisition unit 801 acquires virtual camera path time information, image capturing time information, camera parameter information, and coordinate system adjustment information corresponding to a frame input in step S901 from the virtual camera path data processing apparatus 1. In step S903, the virtual camera information acquisition unit 802 acquires virtual camera information, that is, the camera parameter information, of the frame on the basis of the virtual camera path data acquisition unit 801 or the camera parameter header. The virtual camera information acquisition unit 802 further acquires the image capturing time information of the frame on the basis of an image capturing time information header. Since the data sizes of these pieces of information have a fixed length, the position of the beginning of the data to be read can be designated by the number of frames from the beginning.

In step S904, the subject data management unit 803 acquires, from the storage device 4, material data corresponding to the image capturing time information acquired by the virtual camera information acquisition unit 802. The material data is selected from subject data stored in the storage device 4 on the basis of the image capturing time.

In step S905, the coordinate system adjustment information acquisition unit 804 acquires the coordinate system adjustment information of the frame from the virtual camera path data acquisition unit 801 on the basis of a coordinate system adjustment information header. In step S906, the camera parameter information adjustment unit 805 adjusts the virtual camera parameters acquired by the virtual camera information acquisition unit, or the camera parameter information, on the basis of the coordinate system adjustment information acquired by the coordinate system adjustment information acquisition unit 804. A method for adjusting the camera parameter information will be described in detail with reference to the example illustrated in Figs. 2A to 2F. For example, the camera parameter information of a certain frame acquired by the virtual camera information acquisition unit is set as the virtual camera parameters of the virtual camera 2302. At this time, the coordinate system adjustment information acquired by the coordinate system adjustment information acquisition unit 804 corresponds to the amount 2405 of the change. In the example illustrated in Figs. 2A to 2F, the subject models move parallel by an amount corresponding to the amount 2405 of the change and are arranged while the orientations of the subject models remain unchanged. Accordingly, the camera parameter information is adjusted by subtracting the amount 2405 of the change from the position coordinates in the camera parameter information.

In step S907, the virtual viewpoint video generation unit 804 generates virtual viewpoint video based on the subject data acquired by the subject data management unit 803 and the camera parameter information adjusted in step S906. In step S908, the virtual viewpoint video output unit 605 outputs the virtual viewpoint video generated by the virtual viewpoint video generation unit 604 by using a display device such as a display, or outputs the virtual viewpoint video as a data file or packet data. In step S909, steps S901 to S908 are repeated until the virtual camera path is completed or the frame-by-frame input is completed.

Fig. 10 is a diagram illustrating the communication state of each unit. First, the virtual camera path data processing apparatus 1 is activated, and notifies the virtual viewpoint video generation apparatus 800 of the start of generation of virtual viewpoint video. Although not illustrated in Fig. 8, a control unit for controlling the virtual viewpoint video generation apparatus, which is constituted by a CPU or the like, notifies the virtual camera path data acquisition unit 801 and each unit of the start of generation of virtual viewpoint video, and each unit prepares for it. Subsequently, the virtual camera path data processing apparatus 1 transmits virtual camera path data to the virtual camera path data acquisition unit 801. The virtual camera path data acquisition unit 801 transmits virtual camera information and image capturing time information in the transmitted virtual camera path data, which are obtained by interpreting the header of the virtual camera path data, to the virtual camera information acquisition unit 802, and transmits coordinate system adjustment information to the coordinate system adjustment information acquisition unit 804.

The virtual camera information acquisition unit 802 transmits the image capturing time information to the subject data management unit 803, and transmits the camera parameter information to the camera parameter information adjustment unit 805. The coordinate system adjustment information acquisition unit 804 transmits the acquired coordinate system adjustment information to the camera parameter information adjustment unit 805. The subject data management unit 803 acquires material data corresponding to the input image capturing time information from the storage device 4, and transmits the acquired material data to the virtual viewpoint video generation unit 806. The camera parameter information adjustment unit 805 adjusts the virtual camera parameters on the basis of the acquired coordinate system adjustment information and virtual camera parameters, and transmits the adjusted virtual camera parameters to the virtual viewpoint video generation unit 806. The virtual viewpoint video generation unit 806 renders the virtual viewpoint video in accordance with the acquired subject data and the adjusted camera parameter information.

Upon completion of rendering, the virtual viewpoint video generation unit 806 transmits the generated virtual viewpoint video to the virtual viewpoint video output unit 807, and makes a request for information about a frame of virtual viewpoint video to be generated next. Subsequently, to process the next frame, the acquisition of virtual camera path data, the acquisition of material data corresponding to the virtual camera path data, the acquisition and adjustment of the virtual camera parameters, and the generation and output of the virtual viewpoint video are repeated. When the end of transmission is transmitted from the virtual camera path data processing apparatus 1 to the control unit for controlling the virtual viewpoint video generation apparatus, all the processing ends.

In the present embodiment, the processing is illustrated as a sequential flow in the flowchart, but this is not a limitation. For example, a plurality of pieces of virtual camera path data may be output in parallel.

The data to be exchanged at a time may be per frame or may be collectively per multiple frames. For example, the virtual camera path data acquisition unit 801 may receive virtual camera path data per multiple frames. In this case, for example, the received virtual camera path data for the frames may be stored by the virtual camera path data acquisition unit 801, and information on the stored virtual camera path data may be sequentially transmitted per frame, or may be transmitted per multiple frames. The virtual camera parameters and the subject data to be transmitted to the virtual viewpoint video generation unit 806 are not transmitted in the order as described above, and may be transmitted in reverse order or simultaneously.

As described above, with the use of virtual camera path data including virtual camera parameters and coordinate system adjustment information, appropriate virtual viewpoint video can be generated even when the position of three-dimensional shape data of a subject is changed. In the present embodiment, the virtual viewpoint video generation apparatus 800 is configured to directly acquire the virtual camera path data from the virtual camera path data processing apparatus 1, but this is not a limitation. For example, the virtual viewpoint video generation apparatus 800 may be configured to acquire virtual camera path data stored in the storage device 4 or any other storage device. Alternatively, for example, the virtual viewpoint video generation apparatus 800 may generate virtual viewpoint video by using sequence data generated by the sequence data generation device 7 according to Embodiment 1. At this time, if the sequence data includes material data, the virtual viewpoint video generation apparatus 800 can generate virtual viewpoint video without referring to the material data stored in the storage device 4.

### (Other Embodiments)

In the foregoing embodiments, coordinate system adjustment information is used as change information for changing at least one of the position and orientation of a subject in virtual viewpoint video to change virtual camera parameters, but this is not a limitation. The foregoing embodiments describe the use of a method of acquiring color information of a subject model on the basis of the pixel values of a captured image in accordance with virtual camera parameters and rendering virtual viewpoint video. However, the subject model to be used to generate virtual viewpoint video may be a colored subject model (with a fixed color). Examples of the colored subject model can include colored point cloud model data, mesh model data, and data including fixed-color texture data. In a case where a colored subject model is used, no consideration need be given to the relationship between the virtual camera and the captured image used for coloring. In this case, accordingly, information representing the amount by which the position and orientation of the subject model are to be changed from those at the time of image capture is associated with the virtual camera parameters to generate virtual camera path data. This makes it possible to generate virtual viewpoint video in which the position and orientation of the subject model are changed. In addition, the change information described above is information representing the amount by which the position and orientation of a subject are to be changed from those at the time of image capture, but this is not a limitation. For example, the change information may be information representing the amount of change from the position and orientation of the subject in a reference frame among a plurality of frames in the virtual camera path data.

Further, for example, the information included in the virtual camera path data may be information representing the position and orientation of a subject in the virtual viewpoint video, that is, the arrangement information itself generated by the model operation device 5. In this case, the virtual camera path data is data in which information on the position and orientation of the subject, which is the arrangement information, is associated with the virtual camera parameters.

The present disclosure may also be implemented by processing in which a program for implementing one or more functions of the embodiments described above is supplied to an apparatus or a device via a network or a storage medium and one or more processors in a computer of the apparatus or the device read and execute the program. The present disclosure may also be implemented by circuitry (e.g., an ASIC) that implements the one or more functions.

The present disclosure is not limited to the embodiments described above and may be changed and modified in various ways without departing from the spirit and scope of the present disclosure. Accordingly, to apprise the public of the scope of the present disclosure, the following claims are made.

This application is based upon and claims the benefit of priority from Japanese Patent Application No. 2021-075040 filed April 27, 2021, the disclosure of which is incorporated herein in its entirety by reference.

## Claims

1. An information processing apparatus comprising:
acquisition means for acquiring a parameter that represents a position of a virtual viewpoint and a line-of-sight direction from the virtual viewpoint, the parameter corresponding to a frame included in virtual viewpoint video generated based on a plurality of captured images of a subject, the plurality of captured images being obtained by a plurality of image capturing devices;
specifying means for specifying a position and an orientation of the subject in the virtual viewpoint video; and
output means for outputting virtual viewpoint data in which the parameter acquired by the acquisition means is associated with predetermined information based on the position and the orientation of the subject specified by the specifying means.

2. An information processing apparatus comprising:
acquisition means for acquiring virtual viewpoint data in which a parameter that represents a position of a virtual viewpoint and a line-of-sight direction from the virtual viewpoint is associated with predetermined information, the parameter corresponding to a frame included in virtual viewpoint video generated based on a plurality of captured images of a subject, the plurality of captured images being obtained by a plurality of image capturing devices, the predetermined information being based on a position and an orientation of the subject in the virtual viewpoint video; and
generation means for generating the virtual viewpoint video, based on the virtual viewpoint data.

3. The information processing apparatus according to Claim 1 or 2, wherein the predetermined information is information representing the position and the orientation of the subject in the virtual viewpoint video.

4. The information processing apparatus according to any one of Claims 1 to 3, wherein the predetermined information includes information for changing at least one of the position and the orientation of the subject in the virtual viewpoint video from a position and an orientation of the subject at a time of image capture performed by the plurality of image capturing devices.

5. The information processing apparatus according to any one of Claims 1 to 4, wherein
the predetermined information includes information for changing the parameter in accordance with the position and the orientation of the subject in the virtual viewpoint video.

6. The information processing apparatus according to Claim 5, wherein the virtual viewpoint video is generated based on the parameter changed in accordance with the predetermined information.

7. The information processing apparatus according to Claim 5 or 6, wherein the predetermined information includes information for changing the parameter such that the position of the virtual viewpoint is changed in accordance with the position of the subject in the virtual viewpoint video.

8. The information processing apparatus according to any one of Claims 5 to 7, wherein the predetermined information includes information for changing the parameter such that the line-of-sight direction from the virtual viewpoint is changed in accordance with the orientation of the subject in the virtual viewpoint video.

9. The information processing apparatus according to any one of Claims 1 to 8, wherein
the position and the orientation of the subject in the virtual viewpoint video are a position and an orientation of data representing the subject in a coordinate system for generating the virtual viewpoint video, and
the coordinate system is different from a coordinate system corresponding to an image-capturing space whose images are captured by the plurality of image capturing devices.

10. The information processing apparatus according to any one of Claims 1 to 9, wherein the parameter is a parameter that represents a position of the virtual viewpoint and a line-of-sight direction from the virtual viewpoint in a coordinate system for generating the virtual viewpoint video.

11. The information processing apparatus according to Claim 9, wherein the coordinate system for generating the virtual viewpoint video is a coordinate system corresponding to a background in the virtual viewpoint video.

12. The information processing apparatus according to any one of Claims 1 to 11, wherein
the virtual viewpoint data is data in which a plurality of the parameters are associated with a plurality of pieces of the predetermined information, and
the plurality of pieces of the predetermined information are associated with an identical frame included in the virtual viewpoint video.

13. The information processing apparatus according to any one of Claims 1 to 12, wherein the virtual viewpoint data is data in which the parameter and the predetermined information are further associated with time information for specifying a time at which an image of the subject is captured.

14. The information processing apparatus according to any one of Claims 1 to 13, wherein
the virtual viewpoint video is generated based on material data generated based on the plurality of captured images,
the material data including three-dimensional shape data representing a three-dimensional shape of the subject and texture data representing a color of the subject.

15. The information processing apparatus according to any one of Claims 1 to 14, wherein the virtual viewpoint data is a file including the parameter and the predetermined information.

16. The information processing apparatus according to any one of Claims 1 to 15, wherein the position and the orientation of the subject in the virtual viewpoint video are specified in accordance with a user operation.

17. An information processing method comprising:
an acquisition step of acquiring a parameter that represents a position of a virtual viewpoint and a line-of-sight direction from the virtual viewpoint, the parameter corresponding to a frame included in virtual viewpoint video generated based on a plurality of captured images of a subject, the plurality of captured images being obtained by a plurality of image capturing devices;
a specifying step of specifying a position and an orientation of the subject in the virtual viewpoint video; and
an output step of outputting virtual viewpoint data in which the parameter acquired in the acquisition step is associated with predetermined information based on the position and the orientation of the subject specified in the specifying step.

18. An information processing method comprising:
an acquisition step of acquiring virtual viewpoint data in which a parameter that represents a position of a virtual viewpoint and a line-of-sight direction from the virtual viewpoint is associated with predetermined information, the parameter corresponding to a frame included in virtual viewpoint video generated based on a plurality of captured images of a subject, the plurality of captured images being obtained by a plurality of image capturing devices, the predetermined information being based on a position and an orientation of the subject in the virtual viewpoint video; and
generation means for generating the virtual viewpoint video, based on the virtual viewpoint data.

19. A program for causing a computer to function as the information processing apparatus according to any one of Claims 1 to 16.
